# EUROPÄISCHE PATENTANMELDUNG

(11) **EP 1 507 193 A2**
(43) Veröffentlichungstag der Anmeldung: **16.02.2005**
(21) Anmeldenummer: 04103832.4
(22) Anmeldetag: 09.08.2004
(51) Int. Cl.: G06F 3/03, G06T 7/00

(54) **Laser-Projektor mit Mauszeiger**

(30) Priorität: 14.08.2003 DE 10337448
(71) Anmelder: SIEMENS AKTIENGESELLSCHAFT, 80333 München (DE)
(72) Erfinder: Neddermeyer, Andreas, 31191 Algermissen (DE)

(57) **Zusammenfassung**

Die Erfindung betrifft einen Laser-Projektor, bei dem mit pixel-individuellen Laserstrahlen ein Bild projiziert wird. Erfindungsgemäß sind Mittel zur Erkennung und ortsmäßigen Bestimmung eines Objektes vor dem Bild vorgesehen, wobei der Ort als Steuerkriterium auf eine Steuereinrichtung zur Positionierung eines Zeigeelementes im Bild einwirkt.

## Beschreibung

Die Erfindung betrifft einen Laser-Projektor gemäss dem Oberbegriff des Patentanspruchs 1.

Projektoren beziehungsweise Beamer werden verwendet um beliebige Informationen großflächig präsentieren zu können. Ein herkömmlicher Projektor weist im Allgemeinen zur Bilderzeugung eine Lichtquelle, ein Display als Modulator und eine komplexe Optik auf.

Neben diesen handelsüblichen Projektoren ist es grundsätzlich möglich sogenannte Laser-Projektoren für die Projektion zu verwenden. Es ist beispielsweise denkbar, mit Hilfe von Laserdioden einen miniaturisierten Projektor aufzubauen. Dabei wird zu Bilderzeugung der Laser kontinuierlich über eine Projektionsfläche geführt. Jede Zeile wird zum Beispiel von links nach rechts abgefahren und die einzelnen Zeilen von oben nach unten. Dieses Verfahren wird beispielsweise bei sogenannte CRT-Displays verwendet. Für jeden Bildpunkt müssen die pixelindividuellen Laserstrahlen mit den jeweiligen Pixelinformationen moduliert werden.

Mit einem solchen Laser-Projektor soll der mobile Zugriff auf Informationen unter Verwendung eines großen Displays beziehungsweise eines Projektions-Displays ermöglicht werden. Eine denkbare Anwendung ist die Projektion von Internetseiten.

Hier ergibt sich für den Benutzer das Problem einer komfortablen Benutzerführung. In mobilen Endgeräten ist oftmals weder ein Touchpad noch eine Maus vorhanden. Es müssen neue Wege gefunden werden, um eine Interaktion zwischen dem Bildschirminhalt und dem Benutzer zu ermöglichen.

Bei bekannten Geräten gibt es für die Interaktion zwischen dem Benutzer und dem Bildinhalt verschiedene Ansätze. Eine Möglichkeit um einen Mauszeiger zu steuern ist ein kleiner im Gerät integrierter Joystick. Wesentlich komfortabler ist die Bedienung mittels eines Touchpads. Hierfür wird nur ein Finger oder ein Stift benötigt.

Dieses Konzept lässt sich nur bedingt auf Projektionen übertragen, da sich eine Positionsbestimmung des Fingers nur schwer realisieren lässt. Ein Ansatz ist die Verwendung einer Kamera zur Positionsbestimmung. Diese Kamera nimmt das projizierte Bild mit dem Positionszeiger, beispielsweise einem Finger, Stift, oder Zeigestock auf, und bestimmt über Mittel zur Bildauswertung die Position. Dieses Verfahren wird zum Beispiel zur Bedienung eines Bankterminals verwendet.

Der Erfindung liegt die Aufgabe zugrunde, die Steuerung eines Mauszeigers bei Verwendung eines Laserprojektors zu ermöglichen.

Diese Aufgabe wird erfindungsgemäß durch die im Patentanspruch 1 angegebenen Merkmale gelöst.

Bei dem erfindungsgemäßen Laser-Projektor ist es möglich, über die Laserstrahlen eine genaue Positionsbestimmung für ein vor der Projektionsfläche befindliches Objekt vorzunehmen. Diese Objekt ist beispielsweise der Finger oder die Hand einer Bedienperson.

Ein wesentlicher Vorteil zu einem kleinen Joystick oder gar der Steuerung über das Tastenfeld ist der Bedienungskomfort, da sich einzelne Menüpunkte wesentlich schneller und leichter auswählen lassen.

Gegenüber der Kamera-Lösung kann auf einen vergleichsweise teuren Bild-Sensor und eine komplexe Auswertungssoftware mit der entsprechenden Rechnerleistung verzichtet werden.

Ausgehend von einem Laser-Projektor wird die Erfindung beschrieben. Dieser Laser-Projektor projeziert den Bildinhalt beispielsweise zeilenweise auf eine Projektionsfläche. Dabei wird jeder Bildpunkt sozusagen durch einen pixel-individuellen Laserstrahl dargestellt.

Zusätzlich wird bei dem erfindungsgemäßen Laser-Projektor zu jedem Pixel der Abstand zwischen dem Projektor und der Projektionsfläche bestimmt. Hierzu ist beispielsweise ein zusätzlicher Sensor vorgesehen, der jeweils den reflektierten Laserstrahl erfasst sowie eine Auswerteeinrichtung die die Entfernung bestimmt und somit ein vor der Projektionsfläche befindliches Objekt erkennt. Die Auswerteeinrichtung kann einem im Bild befindlichen Objekt auf Grund des zugehörigen Laserstrahles einen Ort zuordnen. Zur Entfernungsbestimmung weist die Auswerteeinrichtung beispielsweise Mittel zur Laufzeitmessung auf.

Weiter weist der erfindungsgemäße Laser-Projektor eine Steuereinrichtung auf, über die ein Zeigeelement, beispielsweise ein Mauszeiger, im Bild dargestellt wird. Die Position des Zeigers im Bild ist durch den Ort bestimmt, an dem die Auswerteeinrichtung ein Objekt in dem projezierten Bild erkennt. Das Objekt befindet sich hierbei vom Projektor aus gesehen vor der Projektionsfläche.

Befindet sich nun beispielsweise die Hand einer Bedienperson mit ausgestrecktem Zeigefinger innerhalb der Projektionsfläche, wird diese erkannt und kann zur ortsmäßigen Steuerung (XY-Koordinaten) des Zeigers benutzt werden.

Neben der Bestimmung der XY-Koordinaten ist es auch möglich die Z-Koordinate, das heisst die Koordinate in Richtung zum Projektor, beziehungsweise eine Änderung dieser Koordinate zu bestimmen. Sie kann, durch eine entsprechende Hand- oder Fingerbewegung, zum Betätigen einer Taste beziehungsweise zur Auswahl eines Menüpunktes verwendet werden.

Die Realisierung des oben erfindungsgemäßen Laser-Projektors hat zwei grundlegende Komponenten. Zum Einen die Verwendung des Laserstrahls zur Bestimmung der Entfernung. Hierbei ist es von untergeordneter Bedeutung, ob der Laserimpuls zum Erzeugen des jeweiligen Pixels oder ein separater Impuls zur Entfernungsmessung verwendet wird. Zum Zweiten die Verwendung der Abstands- beziehungsweise Ortsinformation (XYZ-Koordinaten) zur Steuerung eines Zeigeelementes und damit zur Programmsteuerung.

## Patentansprüche

1. Laser-Projektor,
bei dem mit pixel-individuellen Laserstrahlen ein Bild projiziert wird,
**gekennzeichnet durch**
Mittel zur Erkennung und ortsmäßigen Bestimmung eines Objektes vor dem Bild, wobei der Ort als Steuerkriterium auf eine Steuereinrichtung zur Positionierung eines Zeigeelementes im Bild einwirkt.

2. Laser-Projektor nach Anspruch 1,
**dadurch gekennzeichnet, dass**
die Mittel zur Erkennung einer Entfernungsänderung der Objekte zum Laser-Projektor ausgebildet sind, und
diese Entfernungsänderung als ein Aktivierungssignal auf die Steuereinrichtung einwirkt.

3. Laser-Projektor nach Anspruch 1 oder 2,
**dadurch gekennzeichnet, dass**
zur Ortsbestimmung und Bestimmung der Entfernungsänderung des Objektes eine Einrichtung zur Laufzeitmessung von reflektierten Laserstrahlen vorgesehen ist.
